## Europäisches Patentamt

## European Patent Office

## Office européen des brevets

(19)

(11) Veröffentlichungsnummer: **0 037 879**
**B1**

(12)

# EUROPÄISCHE PATENTSCHRIFT

(45) Veröffentlichungstag der Patentschrift:
**12.06.85**

(21) Anmeldenummer: **81100945.5**

(22) Anmeldetag: **11.02.81**

(51) Int. Cl.⁴: **G 07 D 1/00,** G 07 F 7/00,
E 05 G 7/00, B 65 G 15/14,
B 65 H 5/02

(54) **Vorrichtung zur Ausgabe von Blattmaterial aus einem geschlossenen Behälter.**

(30) Priorität: **14.04.80 DE 3014173**

(43) Veröffentlichungstag der Anmeldung:
**21.10.81 Patentblatt 81/42**

(45) Bekanntmachung des Hinweises auf die Patenterteilung:
**12.06.85 Patentblatt 85/24**

(84) Benannte Vertragsstaaten:
**AT BE CH FR LI NL SE**

(56) Entgegenhaltungen:
**CH - A - 189 422**
**DE - A - 1 449 020**
**DE - A - 2 410 998**
**DE - A - 2 717 345**
**DE - B - 1 120 361**
**US - A - 3 965 913**

(73) Patentinhaber: **Nixdorf Computer Aktiengesellschaft,
Fürstenallee 7, D-4790 Paderborn (DE)**

(72) Erfinder: **Weigel, Peter, Beerengrund 19,
D-4791 Dörenhagen (DE)**
Erfinder: **Schmeykal, Rudolf, Bek'scher Berg 17,
D-4790 Paderborn (DE)**

(74) Vertreter: **Patentanwälte Schaumburg & Thoenes,
Mauerkircherstrasse 31 Postfach 86 07 48,
D-8000 München 86 (DE)**

## Beschreibung

Die Erfindung betrifft eine Vorrichtung zur Ausgabe von Blattmaterial aus einem geschlossenen Behälter, insbesondere zur Ausgabe von Wertscheinen durch die Wand eines Tresors, mittels einer Förderanordnung, die das Blattmaterial zwischen den Arbeitstrums zweier Endlosförderbänder einklemmt und von einer Aufnahmestelle innerhalb des Behälters durch eine Wandöffnung hindurch zu einer Entnahmestelle ausserhalb des Behälters befördert.

Vorrichtungen zur Ausgabe von Blattmaterial werden weitläufig in Maschinen eingesetzt, die Blattmaterial verarbeiten, beispielsweise in Kopier- und Sortiermaschinen. Ferner werden Vorrichtungen solcher Art auch in automatischen Geldausgabegeräten verwendet, in denen Wertscheine in bestimmter Folge und Anzahl zusammengestellt und dann durch eine Behälterwand ausgegeben werden. Es handelt sich hierbei meist um dickwandige Tresore, in die eine relativ gross bemessene Ausgabeöffnung eingebracht ist.

Eine allgemein zu stellende Forderung im Zusammenhang mit diesen Anwendungen besteht darin, dass der Fördervorgang durch äussere Einflüsse, bei Wertscheinbehältern besonders durch äussere Manipulation, nicht gestört werden darf. Ferner sollen im Falle geschlossener Behälter grosse Behälteröffnungen möglichst vermieden werden, um die Sicherheit, die an sich durch einen geschlossenen Behälter erreicht wird, nicht zu beeinträchtigen. Eine Vorrichtung eingangs genannter Art, die z.B. aus der US-A 3 965 913 bekannt ist, erfüllt diese Forderungen nur unzureichend, zumal bei ihr der Behälterinnenraum durch die Wandöffnung hindurch unmittelbar zugänglich ist und die Funktion einer an der Innenseite der Wandöffnung vorgesehenen fotoelektrischen Anordnung von aussen her gestört werden kann.

Aus der DE-A 1 449 020 ist ferner eine Geldausgabevorrichtung bekannt, bei der ein durch die Behälterwand geneigt verlaufender Ausgabekanal vorgesehen ist, durch den hindurch Geldpakete in eine Ausgaberinne fallen können. Auch hier ist der Ausgabekanal nicht gesichert, so dass bei freiliegender Behälteröffnung der Zugang zu dem Geldvorrat unter Verwendung eines geeigneten Werkzeugs relativ einfach ist.

Es ist Aufgabe der Erfindung, eine Möglichkeit zur Ausgabe von Blattmaterial aus einem geschlossenen Behälter anzugeben, durch die die Behälteröffnung möglichst klein gestaltet werden kann und sämtliche Förderelemente von aussen bequem zugänglich sind, so dass sich dadurch eine einfache Konstruktion sowie eine problemlose Wartung ergibt. Darüber hinaus soll eine Einflussnahme bzw. Manipulation im Behälterinnenraum durch die Wandöffnung hindurch praktisch unmöglich sein.

Diese Aufgabe wird für eine Vorrichtung eingangs genannter Art erfindungsgemäss dadurch gelöst, dass von der Aufnahmestelle zur Entnahmestelle ein geneigt verlaufender Förderweg vorgesehen ist, der durch die aneinander anliegenden Endlosförderbänder gebildet ist, und dass die Transport- und/oder Umlenkrollen der Endlosförderbänder unmittelbar vor bzw. hinter der Wandöffnung angeordnet sind.

Durch das bei der Erfindung vorgesehene Prinzip der Förderung von Blattmaterial zwischen aneinander anliegenden Endlosförderbändern durch die Wandöffnung hindurch ist es möglich, einen sehr zuverlässigen und sicheren Fördervorgang zu verwirklichen und gleichzeitig die Wandöffnung des Behälters so schmal als Schlitzöffnung auszuführen, dass sie gerade geringfügig höher ist als die Trums der möglichst nahe und parallel zueinander zu führenden Förderbänder. Dabei ist natürlich zu berücksichtigen, dass im Falle der gleichzeitigen Förderung mehrerer Blätter bzw. Wertscheine die Höhe des Öffnungsschlitzes unter Berücksichtigung der maximalen Stapelhöhe des Blattmaterials zu bemessen ist. Da das Blattmaterial mit aneinander anliegenden Endlosförderbändern transportiert wird, müssen innerhalb der Behälterwand bzw. der Wandöffnung ausser den Förderbändern selbst keine Transportelemente wie Führungs- oder Umlenkrollen vorgesehen sein, sondern diese können ausserhalb der Behälterwand unmittelbar vor bzw. hinter der Wandöffnung angeordnet sein. Dadurch sind die wichtigsten Teile der Vorrichtung leicht zugänglich und können einfach ausgewechselt oder gewartet werden. Von besonderer Bedeutung ist das Merkmal der Neigung des Förderweges, welches besonders im Hinblick auf die Anwendung der Vorrichtung bei Sicherheitsbehältern eine Einflussnahme auf den Behälterinnenraum praktisch unmöglich macht. Wenn die geneigte Transportbahn beispielsweise von innen nach aussen abwärts verläuft, so ist der Behälterinnenraum nur über einen viel längeren Weg als direkt quer zur Behälterwand zu erreichen. Das Einführen eines Gegenstandes durch diesen langen Öffnungsschlitz in den Behälterinnenraum ist aber sinnlos, denn eine Manipulation ist nicht möglich, da sie nur unter Richtungsumkehr bei Erreichen des Behälterinnenraums durchgeführt werden könnte. Wenn nun noch, wie bereits erläutert, vor bzw. hinter der Wandöffnung Transport- und/oder Umlenkrollen angeordnet sind, bleibt jeglicher Versuch einer Einflussnahme auf den Behälterinhalt erfolglos, da diese Transportelemente entsprechende Manipulationen weiter erschweren.

Es ist möglich, den schlitzartigen, durch die Behälterwand geneigt verlaufenden Kanal mit einer in vertikaler Ebene liegenden Krümmung zu versehen, wodurch der Zugang zum Behälterinnenraum weiter erschwert wird. Ebenso ist es auch möglich, einen zweiten Förderabschnitt ausserhalb des Behälters anschliessend an die Wandöffnung vorzusehen und einen gekrümmten Verlauf dieses Förderweges zu verwirklichen. Hierdurch wird bei entsprechender Gehäuseausführung des weiteren Förderabschnitts der Zugang zur Wandöffnung praktisch vollständig verhindert. Die vorstehend erläuterten Konstruktionsmerkmale führen zu vorteilhaften Weiterbildungen des Grundgedankens der Erfindung, die im einzelnen in den Unteransprüchen gekennzeichnet sind. Die wesentlichen Merkmale und Vorteile der Erfindung sowie möglicher Weiterbildungen werden im folgenden anhand eines in den Figuren dargestellten Ausführungsbeispiels beschrieben.

Es zeigen:

Fig. 1 den Querschnitt eines Teils einer Behälterwand in Verbindung mit einer Vorrichtung nach der Erfindung;

Fig. 2 die in Fig. 1 gezeigte Anordnung mit einem zusätzlich vorgesehenen zweiten Förderabschnitt und

Fig. 3 eine Ansicht der in Fig. 2 gezeigten Vorrichtung in der dort angedeuteten Blickrichtung III.

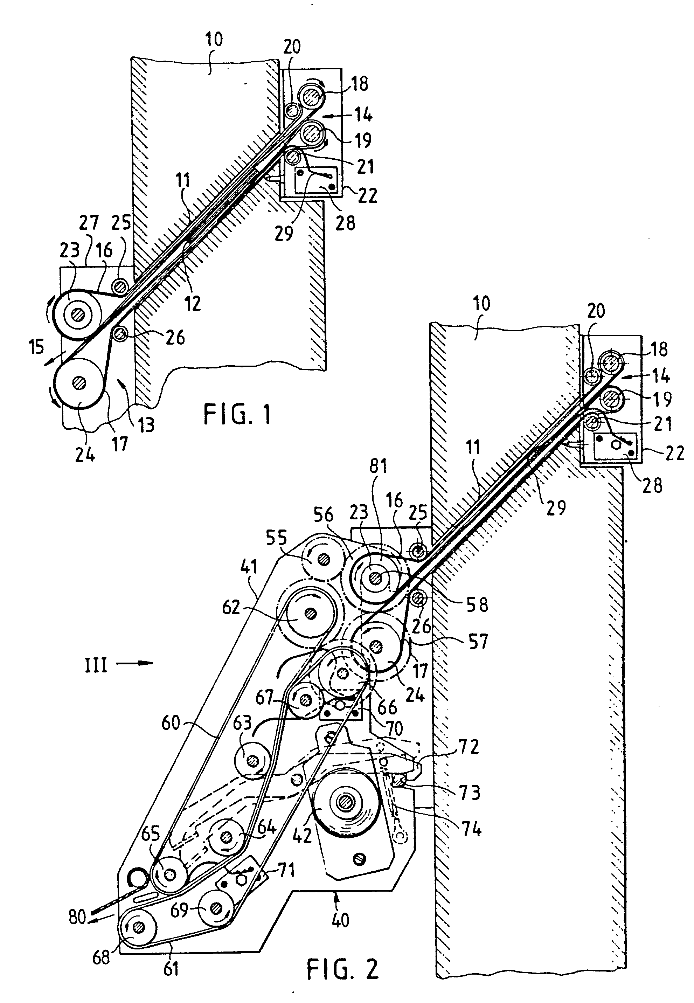

In Fig. 1 ist eine Vorrichtung zur Ausgabe von Wertscheinen 12 durch die Wand 10 eines Tresors dargestellt. Hierzu dient eine Förderanordnung 13, die die Wertscheine 12 von einer Aufnahmestelle 14 und durch die Öffnung 11 der Wand 10 hindurch zu einer Entnahmestelle 15 befördert.

Die Förderanordnung 13 besteht aus zwei Endlosförderbändern 16 und 17, die durch die schlitzartige Wandöffnung 11 hindurch so geführt sind, dass sie sich gegenseitig berühren, was besonders gut an der Zusammenführungsstelle der beiden Förderbänder 16 und 17 zwischen zwei Umlenkrollen 18 und 19 und an der Auseinanderführungsstelle der beiden Förderbänder 16 und 17 zwischen zwei Umlenkrollen 23 und 24 zu erkennen ist. Der Antrieb der Förderanordnung 13 ist in Fig. 1 nicht dargestellt und kann auf eine der Umlenkrollen 23 und 24 einwirken, so dass er also ausserhalb der Tresorwand 10 montiert ist.

Die Förderanordnung 13 ist ersichtlich sehr einfach konstruiert und an jeweils einer inneren bzw. äusseren Platine 22 bzw. 27 montiert. Die beiden Endlosförderbänder 16 und 17 sind unmittelbar vor bzw. hinter der Wandöffnung 11 zusätzlich durch Führungsrollen 20; 21; 25 und 26 so zusammengeführt, dass ihre Trums bei fehlendem Fördergut parallel zueinander laufen und die Begrenzungsflächen der Wandöffnung 11 gerade nicht berühren. Es ist somit zu erkennen, dass das Prinzip der Förderung der Wertscheine zwischen zwei aneinander anliegenden Endlosförderbändern zu einer sehr schmalen, schlitzartigen Wandöffnung 11 führt, durch die hindurch das Behälterinnere praktisch nicht erreicht werden kann.

In Fig. 1 ist ferner dargestellt, dass der Förderweg einen schrägen Verlauf hat, d.h., er ist gegenüber einer vertikalen Ebene vom Behälterinnenraum zum Aussenraum hin abwärts geneigt. Dies erschwert weiter den Zugang zum Innenraum des Tresors, denn ein in die Wandöffnung 11 etwa eingeführtes Werkzeug würde im Bereich der Aufnahmestelle 14 nur weiter aufwärts geführt werden können, da eine Richtungsänderung durch den schrägen Verlauf der Wandöffnung 11 verhindert wird.

Abweichend von dem in Fig. 1 gezeigten geradlinigen Verlauf des Förderweges kann dieser Verlauf in einer vertikalen Ebene auch gekrümmt sein, wodurch der Zugang zum Innenraum des Tresors praktisch unmöglich wird. Dies wäre allerdings mit dem Nachteil verbunden, dass eines der Endlosförderbänder 16 und 17 an einer Begrenzungsfläche der Wandöffnung 11 schleifen würde, so dass es aus entsprechend glattem Material bestehen müsste. Dies würde aber den Fördervorgang nicht beeinträchtigen, denn infolge der Krümmung des Förderweges würden die Wertscheine 12 durch das andere Förderband, welches aus einem Material hoher Haftreibung bestehen könnte, sicher an das glattere Förderband angedrückt.

An der Platine 22 ist ein Mikroschalter 28 befestigt, dessen Betätigungsarm 29 in den Förderweg hineinragt und durch geförderte Wertscheine betätigt werden kann. Daraus kann ein Signal abgeleitet werden, welches in Verbindung mit anderen, hier nicht weiter interessierenden Kriterien den ordnungsgemässen Fördervorgang anzeigt oder einen Förderfehler signalisiert, so dass dadurch die Förderanordnung abgeschaltet werden kann.

Fig. 2 zeigt die in Fig. 1 bereits dargestellte Förderanordnung an der Tresorwand 10, jedoch ohne Wertscheine im Förderweg. Es ist zu erkennen, dass der Betätigungsarm 29 des Mikroschalters 28 in den Förderweg hineinragt, da er durch Fördergut nicht beaufschlagt ist.

Zusätzlich ist in Fig. 2 schematisch ein weiterer Förderabschnitt in einer Schnittdarstellung gezeigt. Er ist durch eine Fördereinheit 40 gebildet, die als Förderelemente zwei Endlosförderbänder 60 und 61 enthält, welche über Umlenk- und Führungsrollen 62 bis 69 geführt sind. Diese Rollen sind gemäss bekannten Konstruktionsprinzipien zwischen zwei Platinen gelagert, von denen in Fig. 2 eine Platine 41 dargestellt ist. Die Fördereinheit 40 ist an den Platinen 27 der bereits beschriebenen Förderanordnung 13 aufgehängt, wozu sie mit den oberen Enden ihrer Platinen 41 mittels hakenförmiger Elemente 81 auf die Achse 58 der Umlenkrollen 23 der Förderanordnung 13 gehängt ist. Im unteren Bereich erfolgt eine Verankerung der Platinen 41 an einem Bolzen 73 der Platinen 27 der Förderanordnung 13, wozu ein Klauenelement 72 vorgesehen ist, das als ein Handhebel ausgebildet ist und durch Federzug mittels einer Feder 74 über den Bolzen 73 einrastet. In Fig. 2 sind zwei unterschiedliche Stellungen des Klauenelements 72 strichpunktiert dargestellt, um zu verdeutlichen, dass die eingerastete Stellung durch Federzug hergestellt wird und dass die gesamte Fördereinheit 40 von den Platinen 27 der Förderanordnung 13 abgenommen werden kann, indem der Handhebel des Klauenelements 72 geschwenkt und die Fördereinheit 40 dann mit ihrem Hakenelement 81 abgenommen wird. Die beiden Endlosförderbänder 60 und 61 haben durch geeignete Anordnung ihrer Umlenkrollen 62 bis 69 einen Verlauf, durch den ein S-förmiger Förderweg verwirklicht ist, so dass sich von der Aufnahmestelle 14 im Inneren des Tresors bis zu der in Fig. 2 gezeigten Entnahmestelle 80 insgesamt ein Förderweg ergibt, der zunächst geradlinig und schräg abwärts durch die Tresorwand 10 verläuft, wonach die Wertscheine zwischen die beiden Endlosförderbänder 60 und 61 gelangen und dann nacheinander zwei Krümmungen durchlaufen. Durch diesen gekrümmten Verlauf des zweiten Förderabschnitts wird ein Zugang zur Wandöffnung 11 von der Entnahmestelle 80 her praktisch vollständig verhindert.

In Fig. 2 ist auch zu erkennen, dass durch die Schrägführung der Wandöffnung 11 in Verbindung mit relativ grossen Umlenkrollen 18; 19; 23; 24 sowie den kleineren Parallelführungsrollen 20; 21; 25; 26 der ersten Förderanordnung 13 unmittelbar vor bzw. hinter der Wandöffnung 11 Umlenkrollen oder zumindest deren Achsen liegen, die einen unbefugten Zugang zur Wandöffnung 11 in horizontaler Richtung verhindern.

Die in Fig. 2 gezeigte Platine 41 trägt einen Antriebsmotor 42, der in noch zu beschreibender Weise den Antrieb beider Förderabschnitte übernimmt. Hierzu erfolgt eine Antriebsverbindung der beiden Förderabschnitte über ein Hauptzahnrad 55, das zur Fördereinheit 40 gehört und in ein Zahnrad 56 eingreift, das auf der Achse der Umlenkrolle 23 der ersten Förderanordnung 13 sitzt. Ferner treibt es über das Zahnrad 56 ein Zahnrad 57 an, welches auf der Achse der Umlenkrolle 24 der Förderanordnung 13 sitzt. Ausserdem erfolgt eine Antriebskopplung des Hauptzahnrades 55 in noch zu beschreibender Weise mit der Umlenkrolle 62 des Endlosförderbandes 60, wodurch dieses infolge seiner Haftreibung das Endlosförderband 61 mitnimmt. Eine entsprechende Haftreibungskopplung besteht auch zwischen den beiden Endlosförderbändern 16 und 17 der Förderanordnung 13.

Fig. 2 zeigt im Verlauf des zweiten Förderabschnitts weitere Mikroschalter 70 und 71, deren Betätigungsarme in den Förderweg hineinragen und wie bereits für den Mikroschalter 28 beschrieben durch das Fördergut betätigt werden. Auf diese Weise ist eine lückenlose Überwachung des gesamten Fördervorganges über den gesamten Förderweg möglich, und die von den Mikroschaltern 28, 70 und 71 abgegebenen elektrischen Signale können zur Steuerung der Wertscheinförderung ausgenutzt werden. Beispielsweise kann geprüft werden, ob die Mikroschalter innerhalb einer vorgegebenen zeitlichen Reihenfolge betätigt und wieder freigegeben werden. Treten Zeitfehler auf, so kann die Entnahmestelle 80 gesperrt werden, so dass es unmöglich ist, etwa fehlerhaft zusammengestellte oder geförderte Wertscheine zu entnehmen. Bei äusserer Manipulation eines der Mikroschalter kann auch ein Alarmsignal ausgelöst werden.

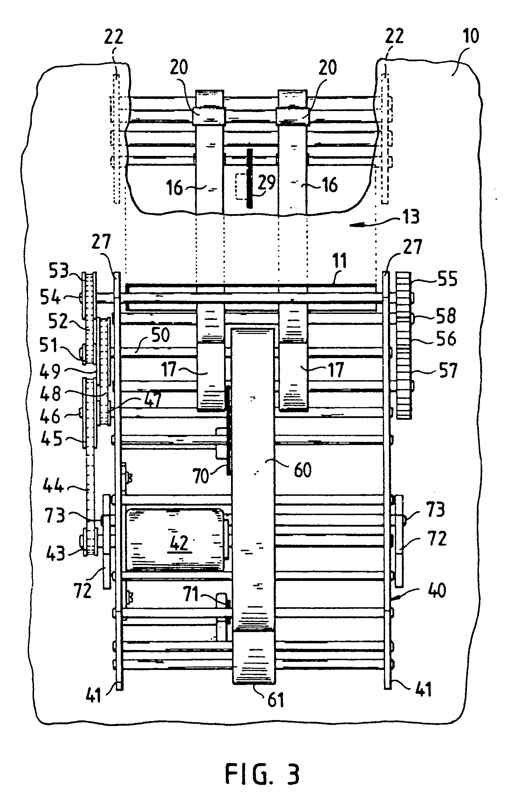

Die beiden Förderabschnitte sind in Fig. 1 und 2 rein schematisch dargestellt, und ihre Elemente können in dem Fachmann geläufiger Weise an unterschiedlichen Stellen von Achsen angeordnet sein, obwohl sie z.B. in Fig. 2 in einer gemeinsamen Ebene dargestellt sind. Dies wird durch Betrachtung der Fig. 3 ersichtlich, die eine Anordnung der in Fig. 2 gezeigten Art in der dort angedeuteten Blickrichtung III zeigt. Dabei ist die Tresorwand 10 teilweise gebrochen dargestellt, um zusätzlich auch die Zuordnung der Einzelteile an der Innenseite der Tresorwand 10 zu verdeutlichen.

Wie bereits erläutert, sind die zur Bewegung und Führung der Endlosförderbänder 16; 17; 60 und 61 vorgesehenen Rollen sowie deren Achsen zwischen jeweils zwei Platinen 22 bzw. 27 gelagert. Fig. 3 lässt erkennen, dass für die Förderanordnung 13 zwei Paare von Endlosförderbändern 16 und 17 vorgesehen sind, die die Wertscheine 12 (Fig. 1) auf einer relativ grossen Breite erfassen, so dass sie sicher durch die schlitzartige Wandöffnung 11 transportiert werden. Ausserhalb der Tresorwand werden die Wertscheine dann durch nur zwei Endlosförderbänder 60 und 61 weitertransportiert, obwohl auch hier mehrere Paare von Endlosförderbändern vorgesehen sein könnten. Die beiden Endlosförderbänder 60 und 61 sind ersichtlich auf den Zwischenraum zwischen den beiden Paaren von Endlosförderbändern 16 und 17 der Förderanordnung 13 ausgerichtet.

Der Antriebsmotor 42 der gesamten Vorrichtung ist an der linken Platine 41 der Fördereinheit 40 montiert und treibt ein Zahnrad 43, welches über einen Zahnriemen 44 ein weiteres Zahnrad 45 dreht. Dieses ist über seine Achse 46 und ein Zahnrad 47 sowie einen weiteren Zahnriemen 48 mit einem Zahnrad 49 auf einer Achse 50 gekoppelt, die wiederum über ein Zahnrad 51 und einen Zahnriemen 52 mit einem Zahnrad 53 gekoppelt ist. Diese Antriebsübertragung ist so bemessen, dass sich die Achse 54 mit geeigneter Drehzahl und Richtung dreht, so dass das am anderen Ende der Achse 54 vorgesehene Hauptzahnrad 55 in bereits beschriebener Weise in das auf der Achse 58 sitzende Zahnrad 56 für die Umlenkrolle 23 des Endlosförderbandes 16 der Förderanordnung 13 eingreifen kann. Ferner ist eine Kopplung des Zahnrades 56 mit einem Zahnrad 57 gezeigt, welches auf der Achse der Umlenkrolle 24 des anderen Endlosförderbandes 17 der Förderanordnung 13 sitzt. Ebenso könnte jedoch auch die gegenseitige Haftreibung zwischen den Endlosförderbändern 16 und 17 allein genügen um einen einwandfreien Antrieb der Förderanordnung 13 zu ermöglichen. Durch den Antrieb beider Förderbänderpaare 16; 17 ist sichergestellt, dass kein Versatz zwischen den Förderbänderpaaren durch unterschiedlichen Schlupf auftritt, was zum Schräglaufen des Fördergutes führen würde.

Fig. 3 zeigt ferner die Zuordnung der Mikroschalter-Betätigungsarme 29; 70 und 71 zu dem jeweiligen Förderweg. Ausserdem ist besonders deutlich zu erkennen, in welcher Weise die Förderelemente den Zugang zu der schlitzartigen und sehr niedrigen Wandöffnung 11 versperren.

## Patentansprüche

1. Vorrichtung zur Ausgabe von Blattmaterial (12) aus einem geschlossenen Behälter, insbesondere zur Ausgabe von Wertscheinen durch die Wand (10) eines Tresors, mittels einer Förderanordnung, die das Blattmaterial (12) zwischen den Arbeitstrums zweier Endlosförderbänder (16; 17) einklemmt und von einer Aufnahmestelle (14) innerhalb des Behälters durch eine Wandöffnung (11) hindurch zu einer Entnahmestelle (15) ausserhalb des Behälters befördert, dadurch gekennzeichnet, dass von der Aufnahmestelle (14) bis zur Entnahmestelle (15) ein geneigt verlaufender Förderweg vorgesehen ist, der durch die aneinander anliegenden Endlosförderbänder (16; 17) gebildet ist, und dass die Transport- und/oder Umlenkrollen (18; 19; 23; 24) der Endlosförderbänder (16; 17) unmittelbar vor bzw. hinter der Wandöffnung (11) angeordnet sind.

2. Vorrichtung nach Anspruch 1, dadurch gekennzeichnet, dass der mindestens zwei Förderabschnitte aufweisende Förderweg mindestens teilweise in einer vertikalen Ebene gekrümmt ist.

3. Vorrichtung nach Anspruch 1 oder 2, dadurch gekennzeichnet, dass zwei Endlosförderbandpaare (16; 17) mit Abstand nebeneinander angeordnet sind.

4. Vorrichtung nach Anspruch 1, 2 oder 3, dadurch gekennzeichnet, dass die Umlenkrollen (18; 19; 23; 24) der durch die Wandöffnung (11) geführten Endlosförderbänder (16; 17) einen gegenüber der Öffnungshöhe grösseren Durchmesser haben und dass zwischen den Umlenkrollen (18; 19; 23; 24) und der Wandöffnung (11) Führungsrollen (20; 21; 25; 26) angeordnet sind, die eine Parallelführung aller Förderbandtrums ohne Wandberührung innerhalb der Wandöffnung (11) bewirken.

5. Vorrichtung nach einem der Ansprüche 1 bis 4, dadurch gekennzeichnet, dass ein erster Förderabschnitt (13) mit paarweise aneinander anliegenden Endlosförderbändern (16; 17) durch die Wandöffnung (11) geführt ist und dass ein zweiter Förderabschnitt (40) mit einem Paar aneinander anliegender Endlosförderbänder (60; 61) ausserhalb der Behälterwand (10) anschliessend an den ersten, durch die Wandöffnung (11) verlaufenden Förderabschnitt (13) vorgesehen ist.

6. Vorrichtung nach Anspruch 5, dadurch gekennzeichnet, dass der erste und der zweite Förderabschnitt (13; 40) einen gemeinsamen Antrieb (42) an der Behälteraussenseite aufweisen.

7. Vorrichtung nach Anspruch 5 oder 6, dadurch gekennzeichnet, dass der zweite Förderabschnitt (40) als eine an der Aussenseite der Behälterwand (10) lösbar befestigte Fördereinheit ausgebildet ist.

8. Vorrichtung nach Anspruch 7, dadurch gekennzeichnet, dass die Fördereinheit mit beidseitig vorgesehenen Hakenelementen (81) auf eine Umlenkrollenachse (58) des ersten Förderabschnitts (13) gehängt ist und zusätzlich einen manuell lösbaren Rastmechanismus (72; 73; 74) zur Verankerung an der Behälterwand (10) aufweist.

9. Vorrichtung nach Anspruch 8, dadurch gekennzeichnet, dass die Fördereinheit im eingehängten Zustand über eine Zahnradkopplung (55; 56) mit dem ersten Förderabschnitt (13) gekoppelt ist.

10. Vorrichtung nach Anspruch 2 und einem der Ansprüche 5 bis 9, dadurch gekennzeichnet, dass der zweite Förderabschnitt (40) den gekrümmten Förderweg aufweist.

11. Vorrichtung nach Anspruch 10, dadurch gekennzeichnet, dass die Krümmung des Förderweges S-förmig ist.

12. Vorrichtung nach einem der Ansprüche 5 bis 11, dadurch gekennzeichnet, dass die Endlosförderbänder (60; 61) des zweiten Förderabschnitts (40) in Förderrichtung gesehen auf die Mitte des Abstandes der Förderbandpaare (16; 17) des ersten Förderabschnitts (13) ausgerichtet sind.

13. Vorrichtung nach Anspruch 4 und 13, dadurch gekennzeichnet, dass der zweite Förderabschnitt (40) zwei Endlosförderbänder (60; 61) aufweist.

14. Vorrichtung nach einem der vorgehenden Ansprüche, dadurch gekennzeichnet, dass dem Förderweg mehrere durch das bewegte Blattmaterial betätigbare elektrische Schalter (28; 70; 71) zugeordnet sind.

## Claims

1. A device for dispensing sheet material (12) out of a closed receptacle, especially for dispensing certificates through the wall (10) of a safe by means of a conveyor arrangement fastening said sheet material (12) between the working strands of two endless conveyor belts (16; 17) and conveying said sheet material from a receiving station (14) within said receptacle through a wall opening (11) to a removing station (15) outside said receptacle, characterized in that a conveying path extending inclined from said receiving station (14) to said removing station (15) is provided, said conveying path being defined by said endless conveyor belts (16; 17) lying one against another, and that the driving and/or deflector rollers (18; 19; 23; 24) of said endless conveyor belts (16; 17) are arranged directly in front of said wall opening (11) or behind said wall opening (11), respectively.

2. A device as set forth in claim 1, characterized in that said conveying path having at least two conveying segments is at least partly curved in a vertical plane.

3. A device as set forth in claim 1 or 2, characterized in that two pairs of endless conveyor belts (16; 17) are arranged adjacent to each other in spaced relationship.

4. A device as set forth in claim 1, 2 or 3, characterized in that said deflector rollers (18; 19; 23; 24) of said endless conveyor belts (16; 17) guided through said wall opening (11) have a diameter greater than the height of said opening, and that guide rollers (20; 21; 25; 26) are disposed between said deflector rollers (18; 19; 23; 24) and said wall opening, said guide rollers causing parallelism of all conveyor belt strands within said wall opening (11) without wall contact.

5. A device as set forth in any of claims 1 to 4, characterized in that a first conveyor segment (13) is guided with pairwise adjacent endless conveyor belts (16; 17) through said wall opening (11), and that a second conveyor segment (40) is provided with a pair of adjacent endless conveyor belts (60; 61) outside said receptacle wall (10) and next to said first conveyor segment (13) extending through said wall opening (11).

6. A device as set forth in claim 5, characterized in that said first and said second conveyor segments (13; 40) have a common drive mechanism (42) provided on the outer side of said receptacle.

7. A device as set forth in claim 5 or 6, characterized in that said second conveyor segment (40) is formed as a conveyor unit releasably attached to the outer side of said receptacle wall (10).

8. A device as set forth in claim 7, characterized in that said conveyor unit having hook elements (81) on both sides is suspended on a deflector roller shaft (58) of said first conveyor segment (13) and includes additionally a manually detachable stop mechanism (72; 73; 74) for anchoring on said receptacle wall (10).

9. A device as set forth in claim 8, characterized in that said conveyor unit is coupled in its suspended state with said first conveyor segment (55; 56) by way of a gear coupling (55; 56).

10. A device as set forth in claim 2 and in any of claims 5 to 9, characterized in that said second conveyor segment (40) has said curved conveying path.

11. A device as set forth in claim 10, characterized in that the curvature of said conveying path is S-shaped.

12. A device as set forth in any of claims 5 to 11, characterized in that said endless conveyor belts (60; 61) of said second conveyor segment (40), seen in conveying direction, are aligned with the center of the space between said conveyor belt pairs (16; 17) of said first conveyor segment (13).

13. A device as set forth in claims 4 and 13, characterized in that said second conveyor segment (40) includes two endless conveyor belts (60; 61).

14. A device as set forth in any of the foregoing claims, characterized in that a plurality of electric switch means (28; 70; 71) actuatable by the moved sheet material are associated with said conveying path.

**Revendications**

1. Dispositif pour distribuer un produit en forme de feuille à partir d'un conteneur fermé, notamment pour distribuer des billets de banque à travers la paroi (10) d'un coffre-fort, au moyen d'un dispositif transporteur qui serre le produit en feuilles (12) entre les brins de travail de deux bandes transporteuses sans fin (16; 17) et le transporte d'un emplacement d'enlèvement (14) à l'intérieur du conteneur, à travers une ouverture (11) dans la paroi jusqu'à un emplacement de retrait (15) à l'extérieur du conteneur, caractérisé en ce qu'on prévoit de l'emplacement d'enlèvement (14) jusqu'à l'emplacement de retrait (15) un parcours de transport incliné constitué par les bandes transporteuses sans fin (16; 17) placées l'une contre l'autre, et que les galets de renvoi et/ou de transport (18; 19; 23; 24) des bandes transporteuses sans fin sont disposées immédiatement devant, ou derrière l'ouverture (11) dans la paroi.

2. Dispositif selon la revendication 1 caractérisé en ce que le trajet de transport, comportant au moins deux portions de transport, est incurvé au moins partiellement dans un plan vertical.

3. Dispositif selon la revendication 1 ou 2, caractérisé en ce que deux paires de bandes transporteuses sans fin (16; 17) sont disposées à distance l'une à côté de l'autre.

4. Dispositif selon la revendication 1, 2 ou 3, caractérisé en ce que les galets de renvoi (18; 19; 23; 24) des bandes transporteuses sans fin (16; 17) guidées à travers l'ouverture (11) dans la paroi ont un diamètre supérieur à la hauteur de l'ouverture, et qu'entre les galets de renvoi (18; 19; 23; 24) et l'ouverture (11) dans la paroi sont disposés des galets de guidage (20; 21; 25; 26) qui assurent un guidage parallèle de tous les brins des bandes transporteuses à l'intérieur de l'ouverture (11) dans la paroi, sans contact avec la paroi.

5. Dispositif selon l'une des revendications 1 à 4, caractérisé en ce qu'une première portion de transport (13) comportant des bandes transporteuses sans fin disposées par paires l'une contre l'autre (16; 17) est guidée à travers l'ouverture (11) dans la paroi, et qu'une seconde portion de transport (40) comportant une paire de bandes transporteuses sans fin (60; 61) est prévue à l'extérieur de la paroi (10) du conteneur, se raccordant à la première portion de transport (13) passant à travers l'ouverture (11) dans la paroi.

6. Dispositif selon la revendication 5, caractérisé en ce que la première et la seconde portion de transport (13; 40) comportent un entraînement commun (42) sur le côté extérieur du conteneur.

7. Dispositif selon la revendication 5 ou 6, caractérisé en ce que la seconde portion de transport (40) est réalisée sous forme d'une unité de transport amovible fixée sur le côté extérieur de la paroi (10) du conteneur.

8. Dispositif selon la revendication 7, caractérisé en ce que l'unité de transport est accrochée sur un axe (58) des galets de renvoi de la première portion de transport (13) par des éléments de crochets (81) prévus de chaque côté et comporte de plus un mécanisme d'encliquetage (71; 73; 74) pouvant être dégagé manuellement, pour l'ancrage sur la paroi (10) du conteneur.

9. Dispositif selon la revendication 8, caractérisé en ce que l'unité de transport, lorsqu'elle est accrochée, est couplée par un engrenage (55; 56) avec la première portion de transport (13).

10. Dispositif selon la revendication 2 et l'une des revendications 5 à 9, caractérisé en ce que la seconde portion de transport (40) comporte le parcours de transport incurvé.

11. Dispositif selon la revendication 10, caractérisé en ce que la courbure du parcours de transport a la forme d'un S.

12. Dispositif selon l'une des revendications 5 à 11, caractérisé en ce que les bandes transporteuses sans fin (60; 61) de la seconde portion de transport (40), vues dans le sens du transport, sont au milieu entre les paires de bandes transporteuses (16; 17) de la première portion de transport (13).

13. Dispositif selon les revendications 4 et 13, caractérisé en ce que la seconde portion de transport (40) comporte deux bandes transporteuses sans fin (60; 61).

14. Dispositif selon l'une des revendications précédentes, caractérisé en ce qu'on associe au parcours de transport plusieurs commutateurs électriques (28; 70; 71) qui peuvent être actionnés par le produit en feuilles mis en mouvement.

0 037 879

FIG. 1

FIG. 2

9

FIG. 3